(19) **Europäisches Patentamt / European Patent Office / Office européen des brevets**

(11) **EP 4 592 941 A1**

(12) **EUROPEAN PATENT APPLICATION**
published in accordance with Art. 153(4) EPC

(43) Date of publication:
**30.07.2025 Bulletin 2025/31**

(21) Application number: **23867594.6**

(22) Date of filing: **21.09.2023**

(51) International Patent Classification (IPC):
**G06T 7/00** (2017.01)

(52) Cooperative Patent Classification (CPC):
Y02E 30/30

(86) International application number:
**PCT/CN2023/120310**

(87) International publication number:
**WO 2024/061309 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.09.2022 CN 202211170363**

(71) Applicants:
 • **China Nuclear Power Operations Co., Ltd.**
  **Shenzhen, Guangdong 518026 (CN)**
 • **China General Nuclear Power Corporation**
  **Shenzhen, Guangdong 518028 (CN)**
 • **CGN Power Co., Ltd.**
  **Shenzen, Guangdong 518028 (CN)**

(72) Inventors:
 • **LUO, Qi**
  **Shenzhen, Guangdong 518026 (CN)**
 • **SONG, Xiang**
  **Shenzhen, Guangdong 518026 (CN)**
 • **DENG, Peian**
  **Shenzhen, Guangdong 518026 (CN)**
 • **LI, Shangke**
  **Shenzhen, Guangdong 518026 (CN)**

 • **SHAN, Qiang**
  **Shenzhen, Guangdong 518026 (CN)**
 • **ZHANG, Guanxiang**
  **Shenzhen, Guangdong 518026 (CN)**
 • **XIE, Yuzhuo**
  **Shenzhen, Guangdong 518026 (CN)**
 • **DU, Changqi**
  **Shenzhen, Guangdong 518026 (CN)**
 • **FU, Zhenzhong**
  **Shenzhen, Guangdong 518026 (CN)**
 • **LI, Gang**
  **Shenzhen, Guangdong 518026 (CN)**
 • **CHEN, Yingyu**
  **Shenzhen, Guangdong 518026 (CN)**
 • **QIAO, Jianqiang**
  **Shenzhen, Guangdong 518026 (CN)**
 • **ZHENG, Yang**
  **Shenzhen, Guangdong 518026 (CN)**
 • **FU, Yongkui**
  **Shenzhen, Guangdong 518026 (CN)**
 • **ZHENG, Lei**
  **Shenzhen, Guangdong 518026 (CN)**

(74) Representative: **Noble, Nicholas et al**
  **Kilburn & Strode LLP**
  **Lacon London**
  **84 Theobalds Road**
  **London WC1X 8NL (GB)**

(54) **DEFECT IDENTIFICATION METHOD AND APPARATUS, COMPUTER DEVICE, AND STORAGE MEDIUM**

(57) Defect identification method and apparatus, a computer device, and a storage medium are provided. The method includes: determining whether an image to be identified contains a defect region and determining discrete distribution values corresponding to the image to be identified, by means of an image reconstruction network in a defect identification model; if the image to be identified contains the defect region, determining a target defect type of the image to be identified by means of a classification network in the defect identification model according to the discrete distribution values corresponding to the image to be identified.

determining whether an image to be identified contains a defect region and determining discrete distribution values corresponding to the image to be identified, by means of an image reconstruction network in a defect identification model

201

in a case where the image to be identified contains the defect region, determining, by neans of a classification network in the defect identification model, a target defect type of the image to be identified based on the discrete distribution values corresponding to the image to be identified

202

**FIG. 2**

**Description**

The present application claims priority to Chinese patent application No. 202211170363.0, filed on September 22, 2022 and entitled "DEFECT IDENTIFICATION METHOD AND APPARATUS, COMPUTER DEVICE, STORAGE MEDIUM AND COMPUTER PROGRAM PRODUCT", the content of which is hereby incorporated by reference in its entirety.

**TECHNICAL FIELD**

The present application relates to technical field of image recognition, in particular to a defect identification method, a defect identification apparatus, a computer device, and a storage medium.

**BACKGROUND**

A containment structure of a nuclear power plant is a protective structure for a nuclear reactor, which is the last safety barrier after a nuclear fuel cladding. Enabling stability of the containment structure to guarantee normal operation of the nuclear reactor, it is necessary to perform safety inspection for the containment structure regularly.

In related art, by deploying an imaging device on the ground, images or videos of an outer surface of the containment structure can be collected. An inspector observes collected images or videos to determine a defect type of the containment structure.

However, in the related art, the collected images are massive in contents, while a defect region of the containment accounts for a relatively small proportion of the area in a collected image as a whole, which leads to a relatively low accuracy of determination of the defect type.

**SUMMARY**

In view of the above technical problem, it is necessary to provide a defect identification method, a defect identification apparatus, a computer device, and a storage medium, which are capable of accurately identifying a defect type.

In a first aspect, the present application provides a defect identification method, which includes:

determining whether an image to be identified contains a defect region and determining discrete distribution values corresponding to the image to be identified, by means of an image reconstruction network in a defect identification model; and

determining, in a case where the image to be identified contains the defect region, a target defect type of the image to be identified by means of a classification network in the defect identification model based on the discrete distribution values corresponding to the image to be identified.

In an embodiment, the image reconstruction network in the defect identification model includes an encoder, a decoder, and a target encoding table. The step of determining whether the image to be identified contains the defect region and determining the discrete distribution values corresponding to the image to be identified by means of the image reconstruction network in the defect identification model includes:

obtaining a target encoding result by inputting the image to be identified into the encoder, and determining a reconstructed encoding result of the target encoding result according to the target encoding result and the target encoding table;

obtaining a target reconstruction image by inputting the reconstructed encoding result of the target encoding result into the decoder, and determining whether the image to be identified contains the defect region based on the image to be identified and the target reconstruction image; and

determining the discrete distribution value corresponding to the image to be identified based on the target encoding result and the target encoding table.

In an embodiment, the step of determining the reconstructed encoding result of the target encoding result according to the target encoding result and the target encoding table includes:

searching for a similar encoding result of the target encoding result from the target encoding table and taking the similar encoding result as the reconstruction encoding result of the target encoding result.

In an embodiment, the method further includes:

obtaining a target partitioned image by partitioning an original captured image; and
obtaining the image to be identified by performing an image enhancement process on the target partitioned image.

In an embodiment, the method further includes:

obtaining sample partitioned images by partitioning a sample image having a labeled defect region;
determining a positive sample image and a negative sample image from the sample partitioned images according to an overlapping relationship between the sample partitioned images and the labeled defect region;
training the image reconstruction network in the defect identification model based on the positive sample image; and
training the classification network in the defect identification model based on the negative sample image, a type label of the negative sample image, and the image reconstruction network after training.

In an embodiment, the step of training the image reconstruction network in the defect identification model based on the positive sample image includes:

obtaining a sample encoding result by inputting the positive sample image into an encoder of the image reconstruction network in the defect identification model;
determining a reconstructed encoding result of the sample encoding result from a target encoding table of the image reconstruction network based on the sample encoding result;
obtaining a sample reconstruction image by inputting the reconstructed encoding result of the sample encoding result into a decoder of the image reconstruction network; and
training the image reconstruction network in the defect identification model based on the positive sample image, the sample encoding result, the reconstructed encoding result of the sample encoding result, and the sample reconstruction image.

In an embodiment, the step of training the classification network in the defect identification model based on the negative sample image, the type label of the negative sample image, and the image reconstruction network after training includes:

obtaining discrete distribution values corresponding to the negative sample image by inputting the negative sample image into the image reconstruction network after training;
obtaining a predicted defect type corresponding to the negative sample image by inputting the discrete distribution values corresponding to the negative sample image into the classification network in the defect identification model; and
training the classification network in the defect identification model based on the discrete distribution values corresponding to the negative sample image, the type label of the negative sample image, and the predicted defect type.

In an embodiment, the step of training the classification network in the defect identification model based on the discrete distribution values corresponding to the negative sample image, the type label of the negative sample image, and the predicted defect type includes:
jointly training the image reconstruction network and the classification network in the defect identification model based on the discrete distribution values corresponding to the negative sample image, the type label of the negative sample image, and the predicted defect type.

In a second aspect, the present application further provides a defect identification apparatus, which includes:

a first determining module, configured to determine whether an image to be identified contains a defect region and determine discrete distribution values corresponding to the image to be identified, by means of an image reconstruction network in a defect identification model; and
a second determining module, configured to determine, in a case where the image to be identified contains the defect region, a target defect type of the image to be identified by means of a classification network in the defect identification model based on the discrete distribution values corresponding to the image to be identified.

In a third aspect, the present application further provides a computer device. The computer device includes a memory and a processor. The memory stores a computer program therein. The processor, when executing the computer program, performs the defect identification method of any one of the embodiments of the aforementioned first aspect.
In a fourth aspect, the present application further provides a computer-readable storage medium. The computer-readable storage medium stores a computer program thereon. The computer program, when executed by a processor, implements the defect identification method of any one of the embodiments of the aforementioned first aspect.

In a fifth aspect, the present application further provides a computer program product. The computer program product includes a computer program. The computer program, when executed by a processor, implements the defect identification method of any one of the embodiments of the aforementioned first aspect.

**BRIEF DESCRIPTION OF THE DRAWINGS**

To more clearly explain embodiments of the present application or technical solutions in the prior art, drawings to be used in description of the embodiments or the prior art are briefly introduced below. It is obvious that the drawings described below are only for some embodiments of the present application, and other drawings may be obtained by an ordinary skilled in the art from the drawings provided without paying creative efforts.

FIG. 1 is a diagram of an application environment of a defect identification method in an embodiment;

FIG. 2 is a flowchart of a defect identification method provided in an embodiment of the present application;

FIG. 3 is a flowchart of a method, provided in an embodiment of the present application, for determining whether an image to be identified contains a defect region and determining discrete distribution values;

FIG. 4 is a schematic diagram of a crack defect provided in an embodiment of the present application;

FIG. 5 is a schematic diagram of a notch defect provided in an embodiment of the present application;

FIG. 6 is another flowchart of a defect identification method provided in an embodiment of the present application;

FIG. 7 is a flowchart of a training method, provided in an embodiment of the present application, for a classification network in a defect identification model;

FIG. 8 is a flowchart of a training method, provided in an embodiment of the present application, for a defect identification model;

FIG. 9 is another flowchart of a defect identification method provided in an embodiment of the present application;

FIG. 10 is a process block diagram of a defect identification method provided in an embodiment of the present application;

FIG. 11 is a structure block diagram of a defect identification apparatus provided in an embodiment of the present application;

FIG. 12 is another structure block diagram of a defect identification apparatus provided in an embodiment of the present application;

FIG. 13 is another structure block diagram of a defect identification apparatus provided in an embodiment of the present application;

FIG. 14 is another structure block diagram of a defect identification apparatus provided in an embodiment of the present application; and

FIG. 15 is an internal structure diagram of a computer device in an embodiment.

**DETAILED DESCRIPTION**

In order to make the purpose, technical solution and advantages of the present application more clearly, the present application is further explained in detail according to embodiments in conjunction with the drawings. Specific examples described herein are only for the purpose of explaining the present application and rather than limiting the present application.

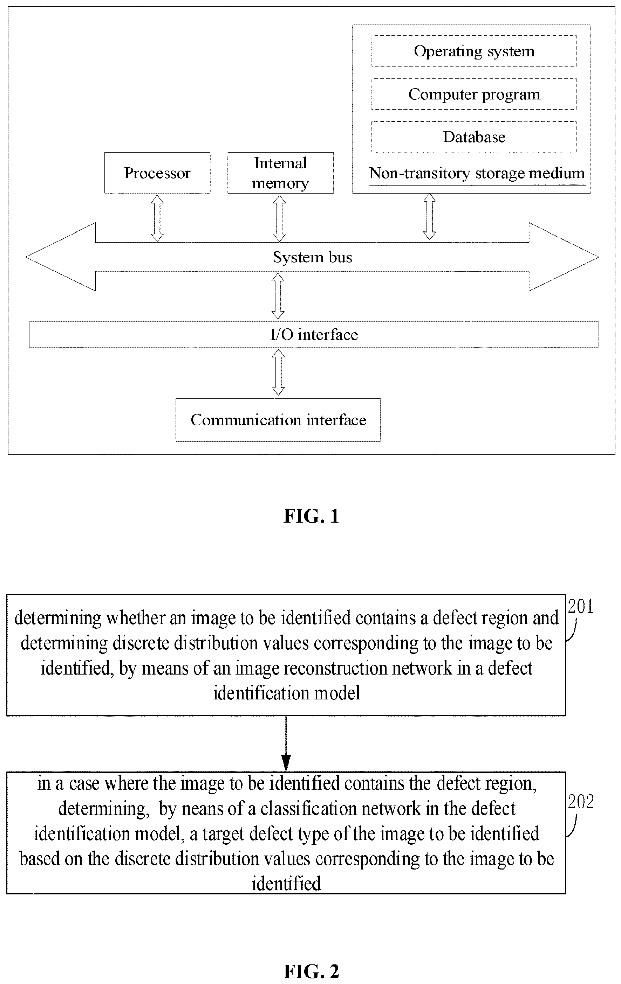

A product recommendation method provided in an embodiment of the present application is able to be applied in an application environment shown in FIG. 1. According to an embodiment, a computer device is provided. The computer device may be a server, and its internal structure diagram may be as shown in FIG. 1. The computer device includes a processor, a memory, and a network interface, which are connected through a system bus. The processor of the computer device is configured to provide computing and controlling capabilities. The memory of the computer device includes a non-transitory storage medium and an internal memory. The non-transitory storage medium stores an operating system, a computer program, and a database thereon. The internal memory provides an environment for operation of the operating system and the computer program in the non-transitory storage medium. The database of the computer device is configured to store obtained data from defect identification. The network interface of the computer device is configured to communicate with an external terminal through network connection. The computer program, when executed by the processor, implements a defect identification method.

The present application discloses a defect identification method, a defect identification apparatus, a computer device, and a storage medium. Whether an image to be identified contains a defect region and discrete distribution values are determined by means of an image reconstruction network in a defect identification model. In a case where the image to be identified contains the defect region, a target defect type is determined based on the discrete distribution values.

FIG. 2 is a flowchart of a defect identification method provided in an embodiment of the present application. As shown in FIG. 2, the defect identification method may include the following steps.

Step 201 includes: determining whether an image to be identified contains a defect region and determining discrete distribution values corresponding to the image to be identified, by means of an image reconstruction network in a defect identification model.

In an embodiment of the present application, in a case where a containment structure of a nuclear power plant needs to be subjected to defect identification, a facade image of the containment structure of the nuclear power plant may be obtained by an imaging device. Considering the large area of the facade image of the containment structure, a partition process may be performed on the facade image to partition the facade image of the containment structure into images to be identified with a certain size, and each image to be identified contains its individual position information. In the case where the containment structure of the nuclear power plant needs to be subjected to defect identification, defect identification may be performed on the images to be identified. In a case where a certain image to be identified contains a defect region, a defect type corresponding to the image to be identified may be determined based on the image reconstruction network in the defect identification model. Defect location for the containment structure is realized in accordance with the position information corresponding to the image to be identified.

As an implementation, after the facade image of the containment structure of the nuclear power plant is obtained, the facade image of the containment structure of the nuclear power plant may be partitioned into images to be identified with a fixed size using a sliding window technique. The size of the images to be identified may be 256*256 (in pixels).

It is to be noted that feature representation of the image to be identified can be learned by means of the image reconstruction network in the defect identification model to acquire a potential space distribution of a defect-region-free portion of the image to be identified. In a case where defect identification needs to be performed on the image to be identified, a relationship between the image to be identified and the potential space distribution of the defect-region-free portion is determined, thereby determining whether the image to be identified contains a defect region. In a case where an error, determined by the image reconstruction network in the defect identification model, between the image to be identified and the potential space distribution of the defect-region-free portion is relatively large, it is determined that the image to be identified contains the defect region. In a case where the error, determined by the image reconstruction network in the defect identification model, between the image to be identified and the potential space distribution of the defect-region-free portion is relatively small, it is determined that the image to be identified does not contain any defect region.

In an embodiment of the present application, an error threshold of the error between the image to be identified and the potential space distribution of the defect-region-free portion is pre-determined as M. In a case where an actual error N between the image to be identified and the potential space distribution of the defect-region-free portion is greater than or equal to the error threshold M, it indicates that the error between the image to be identified and the potential space distribution of the defect-region-free portion is relatively large and it is then determined that the image to be identified contains the defect region. In a case where the actual error N between the image to be identified and the potential space distribution of the defect-region-free portion is smaller than the error threshold M, it indicates that the error between the image to be identified and the potential space distribution of the defect-region-free portion is relatively small, and it is then determined that the image to be identified does not contain any defect region.

It is to be noted that the discrete distribution values corresponding to the image to be identified are responsible for representing a discretized distribution situation of the image to be identified in a feature space, and the discrete distribution values corresponding to the image to be identified may be obtained based on the image reconstruction network in the defect identification model. In a procedure of determining whether the image to be identified contains the defect region based on the image reconstruction network in the defect identification model, the discrete distribution values of the image to be identified in processes of encoding and decoding may be obtained using a vector quantization algorithm.

In addition, for images to be identified containing defect regions, discrete distribution values of the images to be identified respectively corresponding to the images to be identified containing different defect regions are different as well. Therefore, operation of defect identification for the image to be identified can be realized based on the discrete distribution values of the image to be identified.

Step 202 includes: determining, in a case where the image to be identified contains the defect region, a target defect type of the image to be identified by means of a classification network in the defect identification model based on the discrete distribution values corresponding to the image to be identified.

In an embodiment of the present application, before determining the defect type of the image to be identified by means of the classification network in the defect identification model, the classification network may be trained. Specifically, a number of defect samples with label information may be input into the classification network to be trained. The label information includes a defect type of a corresponding defect sample. The classification network is trained in accordance with discrete distribution values corresponding to the defect samples and the label information of the defect samples. In this way, it is guaranteed that the target defect type of the image to be identified can be determined subsequently based on the discrete distribution values corresponding to the image to be identified.

In accordance with the defect identification method of the present application, whether the image to be identified contains the defect region is determined based on the image reconstruction network, which guarantees determination of whether the defect identification for the image to be identified is required and prevents waste of resources, thereby improving automation degree of the defect identification on the image to be identified. Data basis is provided, by determining the discrete distribution values of the image to be identified, for the defect identification on the image to be identified in a subsequent process, which guarantees accuracy of the defect identification on the image to be identified, thereby improving efficiency of the defect identification on the image to be identified. Automated identification for the defect type of the image to be identified is realized by means of the classification network and the discrete distribution values, decreasing the accuracy of the defect identification on the image to be identified, improving the efficiency of the defect identification on the image to be identified, thereby further improving the automation degree of the defect identification on the image to be identified.

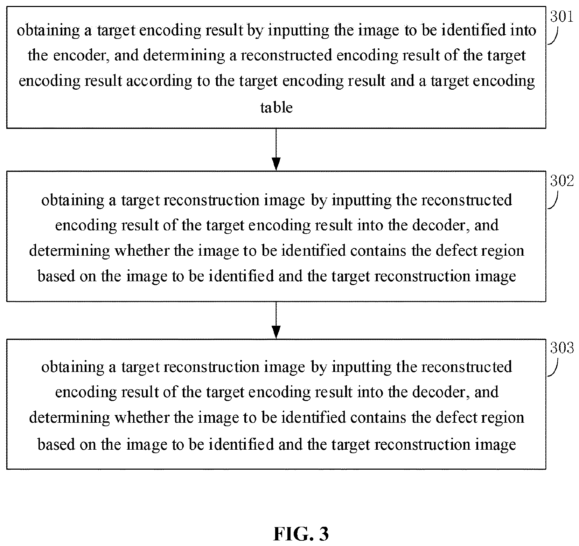

It is noted that the image reconstruction network in the defect identification model includes an encoder, a decoder, and a target encoding table. Whether the image to be identified contains the defect region, and the discrete distribution values corresponding to the image to be identified can be determined based on the encoder and the decoder. Optionally, reference may be made to FIG. 3, which is a flowchart of a method, provided in an embodiment of the present application, for determining whether an image to be identified contains a defect region and determining discrete distribution values. Determining whether an image to be identified contains a defect region and determining discrete distribution values corresponding to the image to be identified may include the following steps.

Step 301 includes: obtaining a target encoding result by inputting the image to be identified into the encoder, and determining a reconstructed encoding result of the target encoding result according to the target encoding result and the target encoding table.

It is to be noted that, in a case where the reconstructed encoding result of the target encoding result needs to be determined, a similar encoding result of the target encoding result is found from the target encoding table and the similar encoding result serves as the reconstruction encoding result of the target encoding result.

In an embodiment of the present application, in the case where the reconstructed encoding result of the target encoding result needs to be determined, the target encoding result is obtained by inputting the image to be identified into the encoder; the similar encoding result that is nearest in distance to the target encoding result is determined from the target encoding table using a nearest neighbor algorithm; and the similar encoding result is taken as the reconstructed encoding result of the target encoding result.

Furthermore, in order to guarantee the distance between the reconstructed encoding result and the target encoding result being close enough, the target encoding table is required to be updated, thereby ensuring that an encoding result in the target encoding table is close enough to the target encoding result.

Step 302 includes: obtaining a target reconstruction image by inputting the reconstructed encoding result of the target encoding result into the decoder, and determining whether the image to be identified contains the defect region based on the image to be identified and the target reconstruction image.

It is to be noted that, similarity between the target reconstruction image and the image to be identified mayo be determined. In a case where the similarity between the target reconstruction image and the image to be identified is relatively high, it indicates that a reconstruction error between the target reconstruction image and the image to be identified is relatively small, and then it may be determined that the image to be identified does not contain any defect region. In a case where the similarity between the target reconstruction image and the image to be identified is relatively low, it indicates that the reconstruction error between the target reconstruction image and the image to be identified is relatively large, and then it may be determined that the image to be identified contains the defect region.

In an embodiment of the present application, a similarity threshold of the similarity between the target reconstruction image and the image to be identified is determined. In determining whether the image to be identified contains the defect region, an image similarity operation is performed on the target reconstruction image and the image to be identified, to determine the similarity between the target reconstruction image and the image to be identified. A relationship between the similarity between the target reconstruction image and the image to be identified and the similarity threshold is determined. In a case where the similarity between the target reconstruction image and the image to be identified is greater than or equal to the similarity threshold, it indicates that the reconstruction error between the target reconstruction image and the image to be identified is relatively small, and then it may be determined that the image to be identified does not contain any defect region. In a case where the similarity between the target reconstruction image and the image to be identified is smaller than the similarity threshold, it indicates that the reconstruction error between the target reconstruction image and the image to be identified is relatively large, and then itmay be determined that the image to be identified contains the defect region.

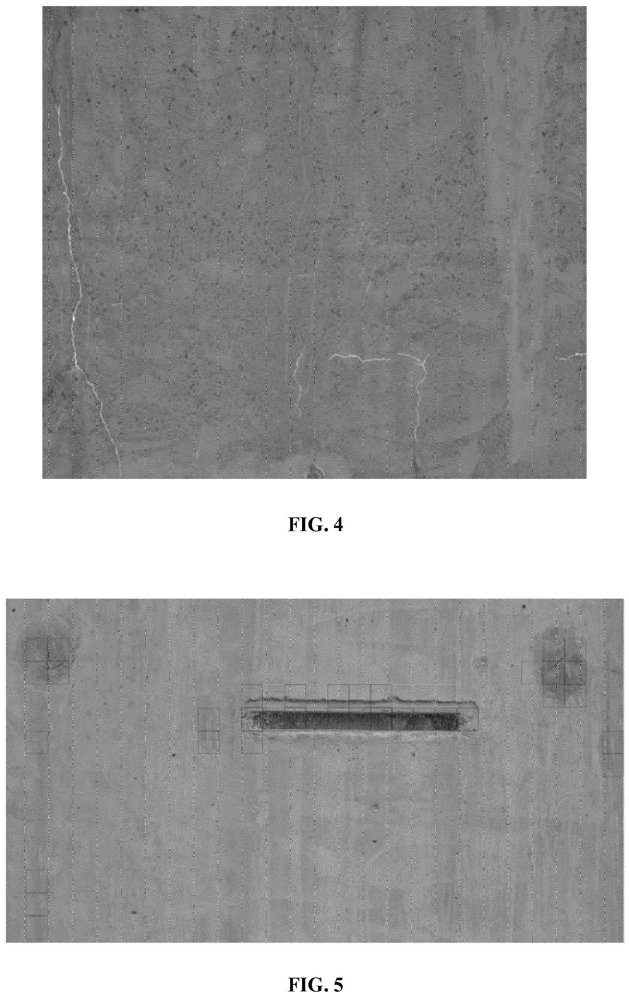

It is to be noted that, in a case where a crack defect exists in the defect region, the defect region may be as shown in FIG. 4. FIG. 4 is a schematic diagram of the crack defect provided in an embodiment of the present application. In a case where a notch defect exists in the defect region, the defect region may be as shown in FIG. 5. FIG. 5 is a schematic diagram of the notch defect provided in an embodiment of the present application.

Step 303 includes: determining the discrete distribution values corresponding to the image to be identified based on the target encoding result and the target encoding table.

It is to be noted that, in a case where the discrete distribution values corresponding to the image to be identified are required to be determined, in a process for the encoder to generate the target encoding result and a process for the decoder to generate the target reconstruction image, the discrete distribution values corresponding to the image to be identified may be obtained based on the target encoding table using the vector quantization algorithm.

In accordance with the defect identification method of the present application, through the target encoding table, the reconstructed encoding result is determined, providing data basis for determining the target reconstruction image in a subsequent process. Determining the target reconstruction image based on the reconstructed encoding result realizes the determination of whether the image to be identified contains the defect region. It guarantees the determination for whether the image to be identified needs the defect identification, prevents waste of resources and improves the automation degree of the defect identification on the image to be identified. In addition, in a case where the defect region exists in the image to be identified, determining the discrete distribution values can provide basis for subsequent determination for the defect type of the image to be identified, ensuring a subsequent defect identification on the image to be identified to be smoothly performed.

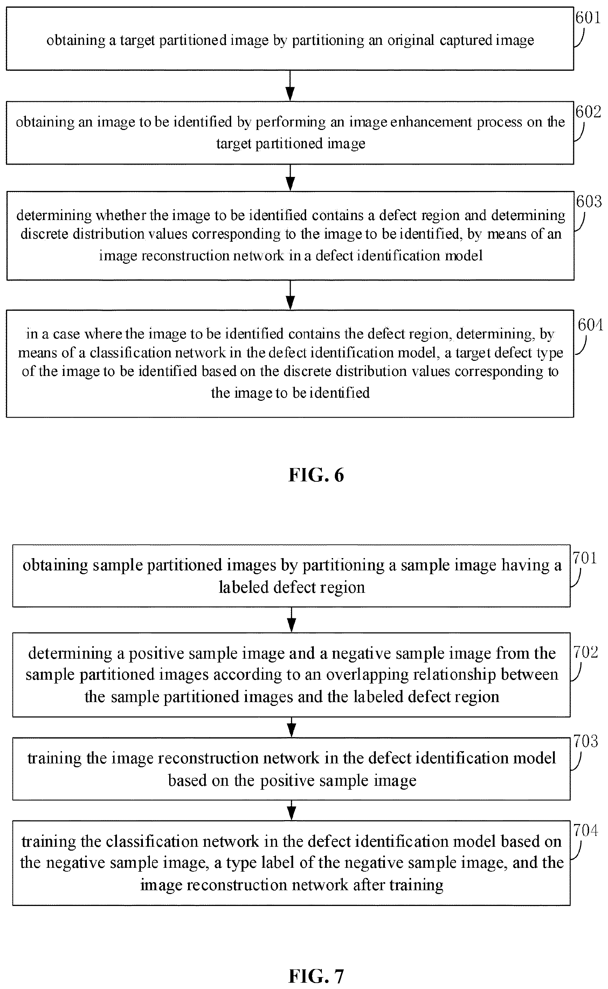

It is to be noted that, images to be identified may be obtained by partitioning an original captured image. Optionally, reference may be made to FIG. 6, which is another flowchart of a defect identification method provided in an embodiment of the present application. Specifically, determining the images to be identified may include the following steps.

Step 601 includes: obtaining a target partitioned image by partitioning an original captured image.

The original captured image refers to an image which contains the facade of the containment structure. Because the area of the facade of the containment structure is relatively large, the original captured image needs to be partitioned to obtain the target partitioned image, thereby ensuring accuracy of identification of the defect type for the facade of the containment structure.

It is to be noted that, the target partitioned image may include position information corresponding to the target partitioned image. In a case where a defect region is included in the target partitioned image, a positional relationship between a defect and the containment structure may be determined in accordance with the position information corresponding to the target partitioned image.

As an implementation, after the original captured image of the containment structure of the nuclear power plant is captured by the imaging device, the original captured image of the containment structure of the nuclear power plant may be partitioned, using a sliding window technique, into images to be identified with a fixed size. The size of the original captured image may be 256*256 (in pixels).

Step 602 includes: obtaining an image to be identified by performing an image enhancement process on the target partitioned image.

It is to be noted that, the image enhancement process refers to variable operations such as rotation, offset, saturation adjustment, and contrast adjustment on the target partitioned image.

In an embodiment of the present application, multiple images to be identified are obtained by performing the image enhancement process on one target partitioned image. Whether the multiple images to be identified contain a defect region is determined by means of the image reconstruction network in the defect identification model. In response to determining that at least one image to be identified of the multiple images to be identified contains a defect region, it indicates that the defect region exists in the target partitioned image. In response to determining that none of the multiple images to be identified contains a defect region, it indicates that no defect region exists in the target partitioned image.

Step 603 includes: determining whether the image to be identified contains a defect region and determining discrete distribution values corresponding to the image to be identified, by means of the image reconstruction network in the defect identification model.

In the embodiment of the present application, step 603 may be implemented in any of the ways described in various embodiments of the present application. Implementation of step 603 is not limited in the present application, and is not repeated herein.

Step 604 includes: in a case where the image to be identified contains the defect region, determining, by means of a classification network in the defect identification model, a target defect type of the image to be identified based on the discrete distribution values corresponding to the image to be identified.

In the embodiment of the present application, step 604 may be implemented in any of the ways described in various embodiments of the present application. Implementation of step 604 is not limited in the present application, and is not repeated herein.

According to the defect identification method of the present application, the target partitioned images are obtained by partitioning the original captured image, so that the original captured image having an originally large area is able to be partitioned into multiple target partitioned images, improving the accuracy of both the defect identification and the defect type determination. The defect identification can be performed on one defect under different perspectives and backgrounds by performing the image enhancement process on the target partitioned images, further improving the accuracy of the defect identification, and preventing a situation where the defect region exists in the original captured image but is not identified.

It is to be noted that, the classification network in the defect identification model may be trained based on a sample image having a labeled defect region. Optionally, reference may be made to FIG. 7, which is a flowchart of a training method, provided in an embodiment of the present application, for the classification network in the defect identification model. Specifically, training the classification network in the defect identification model may include the following steps.

Step 701 includes: obtaining sample partitioned images by partitioning a sample image having a labeled defect region.

It is to be noted that, the sample image may be a containment structure image having a defect, or an image of a structure, similar to the containment structure, having a defect, for example, a facade image of a wall body having a defect or a facade image of a chimney having a defect.

It is to be noted that, before partitioning the sample image, the defect region of the sample image may be annotated manually. In the annotation, a position and a type of the defect are included.

Step 702 includes: determining a positive sample image and a negative sample image from the sample partitioned images according to an overlapping relationship between the sample partitioned images and the labeled defect region.

It is to be noted that, the positive sample image and the negative sample image may be determined by means of determination for an intersection-over-union relationship between the sample partitioned images and the defect region. Specifically, in a case where a value of intersection over union between a sample partitioned image and the defect region is relatively large, it indicates that the overlapping relationship between the sample partitioned image and the defect region is of relatively high degree, and the sample partitioned image is then considered as the negative sample image. In a case where the value of intersection over union between the sample partitioned image and the defect region is relatively small, it indicates that the overlapping relationship between the sample partitioned image and the defect region is of relatively low degree, and the sample partitioned image is then considered as the positive sample image.

In an embodiment of the present application, in determining the positive sample image and the negative sample image, an intersection-over-union threshold is determined. Intersection-over-union calculation is performed based on the sample partitioned images and the defect region, to determine the value of intersection over union between each sample partitioned image and the defect region. A relationship between the value of intersection over union corresponding to each sample partitioned image and the intersection-over-union threshold is determined. In a case where the value of intersection over union is greater than or equal to the intersection-over-union threshold, it indicates that the overlapping relationship between the sample partitioned image and the defect region is of relatively high degree, and the sample partitioned image is then considered as the negative sample image. In a case where the value of intersection over union is smaller than the intersection-over-union threshold, it indicates that the overlapping relationship between the sample partitioned image and the defect region is of relatively low degree, and the sample partitioned image is then considered as the positive sample image.

Step 703 includes: training the image reconstruction network in the defect identification model based on the positive sample image.

It is to be noted that, a sample encoding result is obtained by inputting the positive sample image into the encoder of the image reconstruction network in the defect identification model; a reconstructed encoding result of the sample encoding result is determined from the target encoding table of the image reconstruction network based on the sample encoding result; a sample reconstruction image is obtained by inputting the reconstructed encoding result of the sample encoding result into the decoder of the image reconstruction network; and the image reconstruction network in the defect identification model is trained based on the positive sample image, the sample encoding result, the reconstructed encoding result of the sample encoding result, and the sample reconstruction image.

In an embodiment of the present application, based on a dictionary lookup algorithm of vector quantization, a candidate encoding result which is near to the target encoding result in distance is generated by utilizing loss function (1), and the candidate encoding result is stored in the target encoding table, thereby realizing an updating operation for the target encoding table. Loss function (1) is shown as the following formula:

$$L_1 = \|x - D(x)\|_2^2 + \|sg[E(x)] - e\|_2^2 + \beta \|sg[e] - E(x)\|_2^2 \tag{1}$$

$L_1$ refers to loss function (1) of the image reconstruction network in the defect identification model, x refers to the image to be identified which is input into the encoder and the decoder, $E(x)$ refers to the target encoding result obtained by inputting the image to be identified into the encoder, $D(x)$ refers to the target reconstruction image obtained by inputting the reconstructed encoding result of the target encoding result into the decoder, e refers to an encoding result in the target encoding table, sg refers to a stop-gradient operation, and $\beta$ refers to a hyperparameter configured to control damping of $E(x)$.

Loss function (1) is further described as follows. To prevent the efficiency of updating the encoding result in the target encoding table to be the same as the efficiency of parameter update of the encoder in an encoding process, which may lead to instability of reconstruction effect due to a large feature difference between the target encoding table and the target encoding result, the feature difference between the target encoding table and the target encoding result is reduced through the part $\beta \|sg[e] - E(x)\|_2^2$ of loss function (1).

Furthermore, parameters of the defect identification model, which are directly transformed by means of nonlinear mapping, cannot be backpropagated directly. Therefore, as shown in loss function (1), a reconstruction error of a generated image is directly transferred, by means of a straight-through estimation, for parameter updating, where the part $\|x - D(x)\|_2^2$ of loss function (1) is the reconstruction error of the target reconstruction image.

Moreover, in order to guarantee the distance between the encoding result in the target encoding table and the target encoding table is close enough, the encoding result in the target encoding table may be made to approach to the target encoding result generated in the encoder through the part $\|sg[E(x)] - e\|_2^2$ of loss function (1).

Step 704 includes: training the classification network in the defect identification model based on the negative sample image, a type label of the negative sample image, and the image reconstruction network after training.

It is to be noted that, discrete distribution values corresponding to the negative sample image are obtained by inputting the negative sample image into the image reconstruction network after training; a predicted defect type corresponding to the negative sample image is obtained by inputting the discrete distribution values corresponding to the negative sample image into the classification network in the defect identification model; and the classification network in the defect identification model is trained based on the discrete distribution values corresponding to the negative sample image, the type label of the negative sample image, and the predicted defect type.

In an embodiment of the present application, N positive sample images $x_i$ and negative sample images $y_i$ having a labeled defect region are input into the image reconstruction network in the defect identification model to obtain corresponding discrete distribution values of the positive sample images $x_i$ and negative sample images $y_i$. The discrete distribution values and negative sample images $y_i$ are input into the classification network in the defect identification model for feature extraction and training. Loss function (2) of the classification network in the defect identification model is binary cross-entropy loss and loss function (2) is shown in the following formula.

$$L_2 = -\frac{1}{N}\sum_1^N \left[ y_i \log \hat{y}_i + (1 - y_i) \log (1 - \hat{y}_i) \right] \tag{2}$$

$L_2$ refers to loss function (2) of the classification network in the defect identification model. N refers to a number of the negative sample images $y_i$, and $y_i$ refers to the negative sample images.

In an embodiment of the present application, the image reconstruction network and the classification network in the defect identification model are jointly trained based on the discrete distribution values corresponding to the negative sample image, the type label of the negative sample image, and the predicted defect type. Loss function (3) after joint training is shown as the following formula.

$$L_3 = \|x - D(x)\|_2^2 + L_2 \tag{3}$$

$L_3$ refers to loss function (3) of the image reconstruction network and the classification network after joint training. L2 refers to loss function (2) of the classification network in the defect identification model. D(x) refers to the target reconstruction image obtained by inputting the reconstructed encoding result of the target encoding result into the decoder, and x refers to the image to be identified input into the decoder.

In addition, loss function (2) and loss function (3) are used to accomplish model training. In a case where the defect identification model is trained, optimization objective is to minimize the value of the total loss function (3). A relatively large loss of the classification network may be utilized to update the classification network, which leads to an increase in the error of the image reconstruction network and change of the encoding result in the target encoding table. As a result, the difference in discrete spatial feature distribution between the positive sample images and negative sample images in the image reconstruction network becomes larger. Thus, the classification network is able to be used to classify defects and anomalies in the spatial feature distribution, achieving better identification for defect data. For an identified defect, location for the defect is determined in accordance with position information labeled in the defect region in the sample image and an image name.

In an embodiment of the present application, in a case where it is required to determine the target defect type of the image to be identified, the image to be identified containing the defect region is determined by means of the image reconstruction network in the defect identification model. In the case where it is required to determine the target defect type of the image to be identified, a supervised training may be performed on the classification network in the defect identification model with the discrete distribution values and negative sample images $y_{ic}$ with type labels as input. Back-propagation for the classification network uses cross-entropy loss function (4). Loss function (4) is shown as the following formula. N samples and M types are input into the classification network for training to learn parameters of the network. After model convergence, type prediction on input discrete distribution values is performed to determine the target defect type of the image to be identified. The loss function (4) is shown in the following formula.

$$L_4 = -\frac{1}{N}\sum_{i=1}^{N}\sum_{c=1}^{M} y_{ic} \log \hat{y}_{ic} \qquad (4)$$

$L_4$ refers to loss function (4) of the image reconstruction network and the classification network after joint training. N refers to the number of the samples. M refers to the number of the defect types. Here, $y_i$, refers to negative sample images with type labels, i refers to i-th sample among the N samples, and c refers to c-th defect type among the M defect types.

According to the defect identification method in the present application, the determination of whether the image to be identified contains the defect region is realized by means of training the image reconstruction network in the defect identification model, thereby ensuring the accuracy of the determination of whether the image to be identified contains the defect region. The classification network in the defect identification model is trained based on the negative sample image, the type label of the negative sample image, and the image reconstruction network after training. This ensures subsequent determination for the target defect type in the image to be identified and improves the accuracy of the determination for the target defect type.

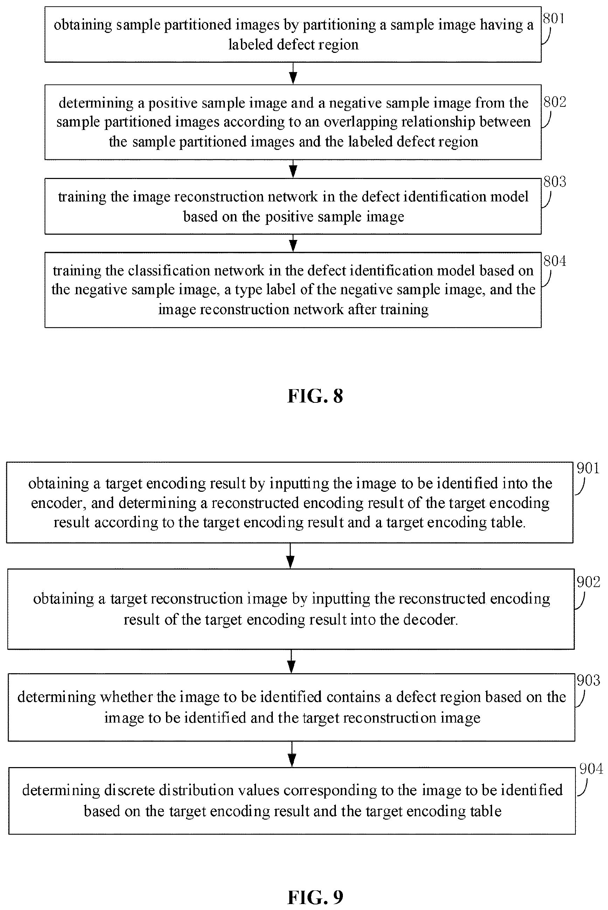

In an embodiment of the present application, reference may be made to FIG.8, which is a flowchart of a training method, provided in an embodiment of the present application, for the defect identification model. In a case where the defect identification model is to be trained, the following steps may be performed.

Step 801 includes: obtaining sample partitioned images by partitioning a sample image having a labeled defect region.

Step 802 includes: determining a positive sample image and a negative sample image from the sample partitioned images according to an overlapping relationship between the sample partitioned images and the labeled defect region.

Step 803 includes: training the image reconstruction network in the defect identification model based on the positive sample image.

In an embodiment of the present application, a sample encoding result is obtained by inputting the positive sample image into the encoder of the image reconstruction network in the defect identification model; a reconstructed encoding result of the sample encoding result is determined from the target encoding table of the image reconstruction network based on the sample encoding result; a sample reconstruction image is obtained by inputting the reconstructed encoding result of the sample encoding result into the decoder of the image reconstruction network; and the image reconstruction network in the defect identification model is trained based on the positive sample image, the sample encoding result, the reconstructed encoding result of the sample encoding result, and the sample reconstruction image.

Step 804 includes: training the classification network in the defect identification model based on the negative sample image, a type label of the negative sample image, and the image reconstruction network after training.

In an embodiment of the present application, discrete distribution values corresponding to the negative sample image are obtained by inputting the negative sample image into the image reconstruction after training; a predicted defect type corresponding to the negative sample image is obtained by inputting the discrete distribution values corresponding to the negative sample image into the classification network in the defect identification model; and the classification network in the defect identification model is trained based on the discrete distribution values corresponding to the negative sample image, the type label of the negative sample image, and the predicted defect type.

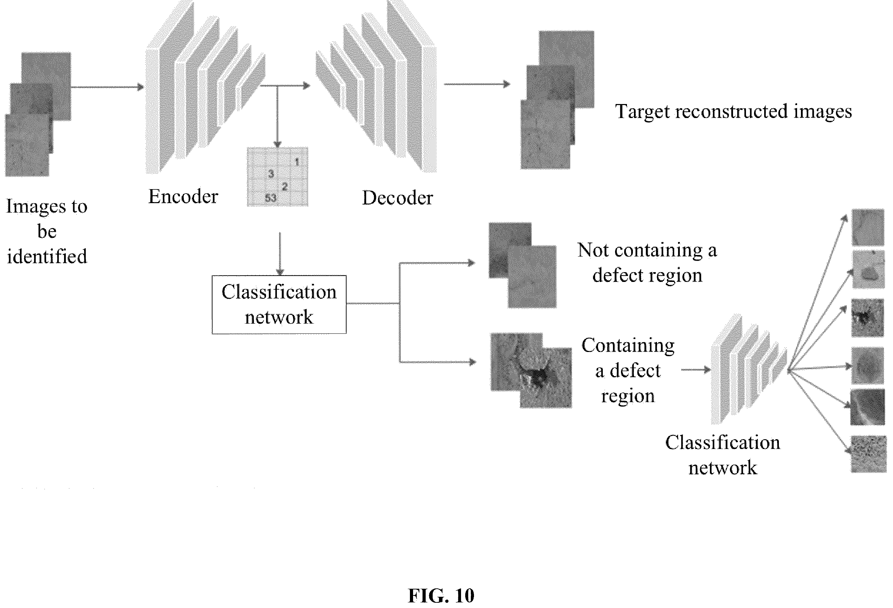

According to an embodiment of the present application, reference may be made to FIG. 9 and FIG. 10. FIG. 9 is another flowchart of a defect identification method provided in an embodiment of the present application. FIG. 10 is a process block diagram of a defect identification method provided in an embodiment of the present application. After the defect identification model is trained, defect identification on an image to be identified may include the following steps.

Step 901 includes: obtaining a target encoding result by inputting the image to be identified into the encoder, and determining a reconstructed encoding result of the target encoding result according to the target encoding result and a target encoding table.

Step 902 includes: obtaining a target reconstruction image by inputting the reconstructed encoding result of the target encoding result into the decoder.

Step 903 includes: determining whether the image to be identified contains a defect region based on the image to be identified and the target reconstruction image.

Step 904 includes: determining discrete distribution values corresponding to the image to be identified based on the target encoding result and the target encoding table.

Step 905 includes: obtaining a predicted defect type corresponding to the image to be identified by inputting the discrete distribution values corresponding to the image to be identified into the classification network in the defect identification model.

In accordance with the defect identification method of the present application, whether the image to be identified contains the defect region is determined based on the image reconstruction network, which guarantees determination of whether the defect identification for the image to be identified is required and prevents waste of resources, thereby improving automation degree of the defect identification on the image to be identified. Data basis is provided, by determining the discrete distribution values of the image to be identified, for the defect identification on the image to be identified in a subsequent process, which guarantees accuracy of the defect identification on the image to be identified, thereby improving efficiency of the defect identification on the image to be identified. Automated identification for the defect type of the image to be identified is realized by means of the classification network and the discrete distribution values, decreasing the accuracy of the defect identification on the image to be identified, improving the efficiency of the defect identification on the image to be identified, thereby further improving the automation degree of the defect identification on the image to be identified.

It is understood that, although the steps in the flowcharts involved in respective embodiments described above are shown sequentially as indicated by arrows, the steps are not necessarily executed sequentially in the order indicated by the arrows. Unless explicitly stated herein, there is no strict order in which these steps are performed and the steps may be performed in any other order. Furthermore, at least part of the steps of the flowcharts involved in each embodiment above may include multiple sub-steps or stages, and these sub-steps or stages are not necessarily executed simultaneously, but may be executed at different moments. An execution sequence of these sub-steps or stages does not necessarily proceed in order but may be executed alternately or in turn with at least part of the sub-steps or stages within other steps.

Based on the same inventive concept, an embodiment of the application further provides a defect identification apparatus for implementing the defect identification method involved above. The implementation solution provided by the apparatus to solve the problem is similar to the implementation solution recorded in the above method, thus specific limits in one or more embodiments directed to the defect identification apparatus provided below may be referred to the above limits on the defect identification method, which are not repeated herein.

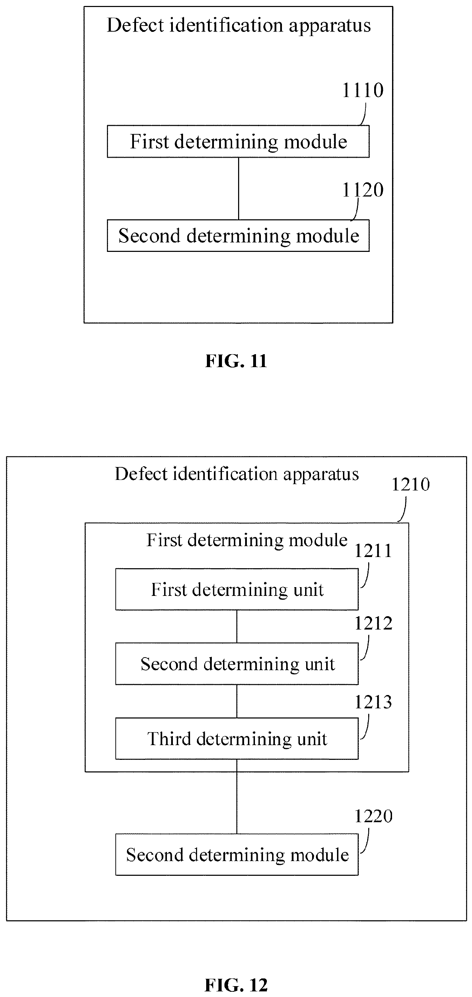

FIG. 11 is a structure block diagram of a defect identification apparatus provided in an embodiment of the present application. In an embodiment, as shown in FIG. 11, a defect identification apparatus is provided, including a first determining module 1110 and a second determining module 1120.

The first determining module 1110 is configured to: determine whether an image to be identified contains a defect region and determine discrete distribution values corresponding to the image to be identified, by means of an image reconstruction network in a defect identification model.

The second determining module 1120 is configured to: determine, in a case where the image to be identified contains the defect region, a target defect type of the image to be identified by means of a classification network in the defect identification model based on the discrete distribution values corresponding to the image to be identified.

According to the defect identification apparatus of the present application, whether the image to be identified contains the defect region is determined based on the image reconstruction network, which guarantees determination of whether the defect identification for the image to be identified is required and prevents waste of resources, thereby improving automation degree of the defect identification on the image to be identified. Data basis is provided, by determining the discrete distribution values of the image to be identified, for the defect identification on the image to be identified in a subsequent process, which guarantees accuracy of the defect identification on the image to be identified, thereby improving efficiency of the defect identification on the image to be identified. Automated identification for the defect type of the image to be identified is realized by means of the classification network and the discrete distribution values, decreasing the accuracy of the defect identification on the image to be identified, improving the efficiency of the defect identification on the image to be identified, thereby further improving the automation degree of the defect identification on the image to be identified.

FIG. 12 is a structure block diagram of a defect identification apparatus provided in an embodiment of the present application. In an embodiment, as shown in FIG. 12, a defect identification apparatus is provided. An image reconstruction network in a defect identification model includes an encoder, a decoder, and a target encoding table. A first determining module 1210 includes a first determining unit 1211, a second determining unit 1212, and a third determining unit 1213.

The first determining unit 1211 is configured to: obtain a target encoding result by inputting an image to be identified into the encoder, and determine a reconstructed encoding result of the target encoding result according to the target encoding result and the target encoding table.

It is to be noted that, a similar encoding result of the target encoding result is searched from the target encoding table and the similar encoding result serves as the reconstruction encoding result of the target encoding result.

The second determining unit 1212 is configured to: obtain a target reconstruction image by inputting the reconstructed encoding result of the target encoding result into the decoder, and determine whether the image to be identified contains a defect region based on the image to be identified and the target reconstruction image.

The third determining unit 1213 is configured to: determine discrete distribution values corresponding to the image to be identified based on the target encoding result and the target encoding table.

A module 1220 in FIG. 12 and the module 1120 in FIG. 11 have the same function and structure.

In accordance with the defect identification apparatus of the present application, through the target encoding table, the reconstructed encoding result is determined, providing data basis for determining the target reconstruction image in a subsequent process. Determining the target reconstruction image based on the reconstructed encoding result realizes the determination of whether the image to be identified contains the defect region. It guarantees the determination for whether the image to be identified needs the defect identification, prevents waste of resources and improves the automation degree of the defect identification on the image to be identified. In addition, in a case where the defect region exists in the image to be identified, determining the discrete distribution values can provide basis for subsequent determination for the defect type of the image to be identified, ensuring a subsequent defect identification on the image to be identified to be smoothly performed.

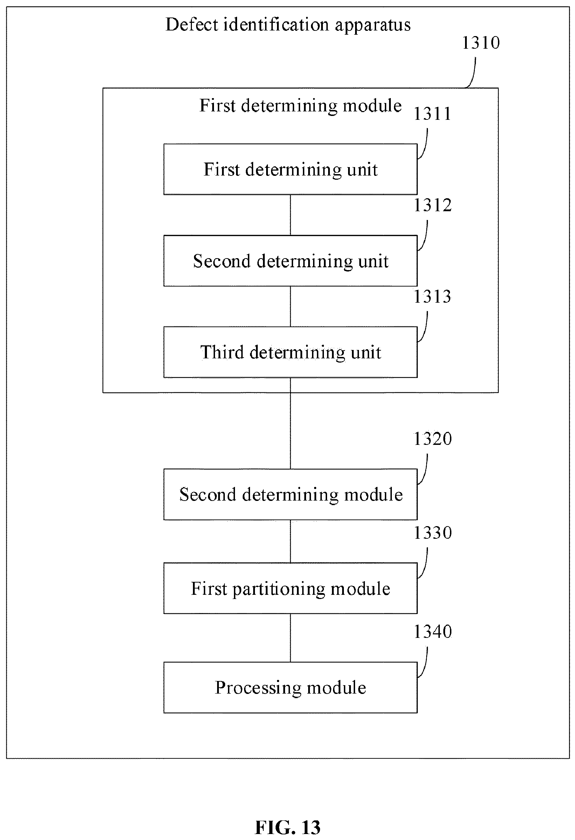

FIG. 13 is a structure block diagram of a defect identification apparatus provided in an embodiment of the present application. In an embodiment, as shown in FIG. 13, a defect identification apparatus is provided. The defect identification apparatus further includes a first partitioning module 1330 and a processing module 1340.

The first partitioning module 1330 is configured to: obtain a target partitioned image by partitioning an original captured image.

The processing module 1340 is configured to: obtain an image to be identified by performing an image enhancement process on the target partitioned image.

A module 1310 and a module 1320 in FIG. 13 have same functions and structures with the module 1210 and the module 1220 in FIG. 12, respectively.

According to the defect identification apparatus of the present application, the target partitioned images are obtained by partitioning the original captured image, so that the original captured image having an originally large area is able to be partitioned into multiple target partitioned images, improving the accuracy of both the defect identification and the defect type determination. The defect identification can be performed on one defect under different perspectives and backgrounds by performing the image enhancement process on the target partitioned images, further improving the accuracy of the defect identification, and preventing a situation where the defect region exists in the original captured image but is not identified.

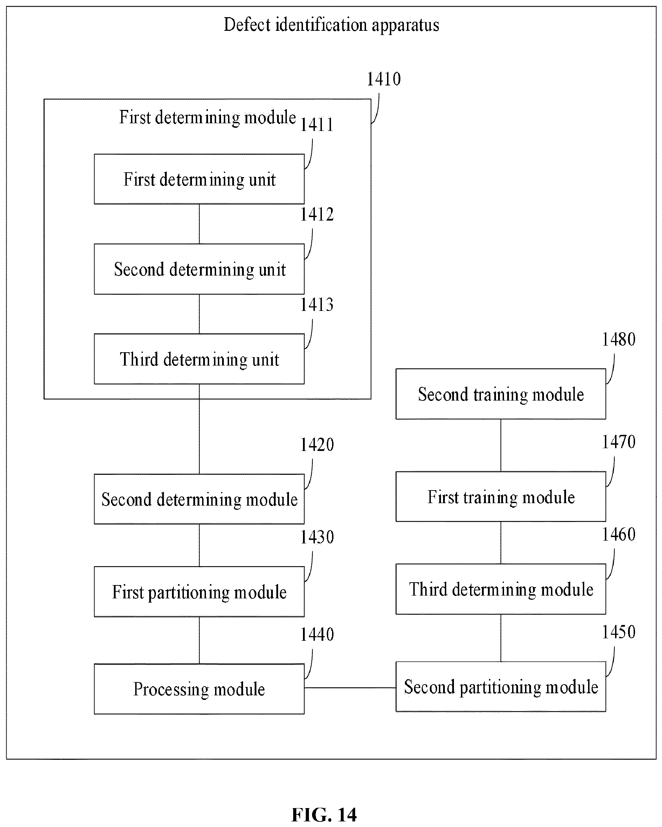

FIG. 14 is a structure block diagram of a defect identification apparatus provided in an embodiment of the present application. In an embodiment, as shown in FIG. 14, a defect identification apparatus is provided. The defect identification apparatus further includes a second partitioning module 1450, a third determining module 1460, a first training module 1470, and a second training module 1480.

The second partitioning module 1450 is configured to obtain sample partitioned images by partitioning a sample image having a labeled defect region.

The third determining module 1460 is configured to determine a positive sample image and a negative sample image from the sample partitioned images according to an overlapping relationship between the sample partitioned images and the labeled defect region.

The first training module 1470 is configured to train the image reconstruction network in the defect identification model based on the positive sample image.

It is to be noted that, a sample encoding result is obtained by inputting the positive sample image into the encoder of the image reconstruction network in the defect identification model; a reconstructed encoding result of the sample encoding result is determined from the target encoding table of the image reconstruction network based on the sample encoding result; a sample reconstruction image is obtained by inputting the reconstructed encoding result of the sample encoding result into the decoder of the image reconstruction network; and the image reconstruction network in the defect identification model is trained based on the positive sample image, the sample encoding result, the reconstructed encoding result of the sample encoding result, and the sample reconstruction image.

The second training module 1480 is configured to train the classification network in the defect identification model based on the negative sample image, a type label of the negative sample image, and the image reconstruction network after training.

It is to be noted that, discrete distribution values corresponding to the negative sample image are obtained by inputting the negative sample image into the image reconstruction network after training; a predicted defect type corresponding to the negative sample image is obtained by inputting the discrete distribution values corresponding to the negative sample image into the classification network in the defect identification model; and the classification network in the defect identification model is trained based on the discrete distribution values corresponding to the negative sample image, the type label of the negative sample image, and the predicted defect type.

In an embodiment of the present application, the image reconstruction network and the classification network in the defect identification model are jointly trained based on the discrete distribution values corresponding to the negative sample image, the type label of the negative sample image, and the predicted defect type.

Modules 1410, 1420, 1430, and 1440 in FIG. 14 have same functions and structures with the modules 1310, 1320, 1330, and 1340 in FIG. 13, respectively.

According to the defect identification apparatus of the present application, determining whether the image to be identified contains the defect region can be realized by training the image reconstruction network in the defect identification model, thereby ensuring the accuracy of the determination of whether the image to be identified contains the defect region. The classification network in the defect identification model is trained based on the negative sample image, the type label of the negative sample image, and the image reconstruction network after training. This ensures subsequent determination for the target defect type in the image to be identified and improves the accuracy of the determination for the target defect type.

All or part of the various modules in the above-mentioned defect identification apparatus are capable of being implemented through software, hardware or a combination of both. The above-mentioned modules are capable of being embedded in or independent from the processor of the computer device in hardware form, or stored in the memory of the computer device in software form, facilitating the processor to call to execute corresponding operations of respective modules.

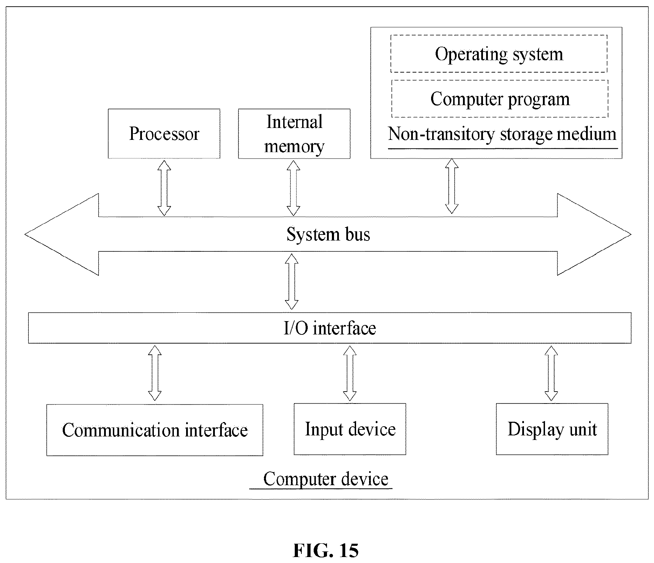

In an embodiment, a computer device is provided. The computer device may be a terminal, and its internal structure diagram may be as shown in FIG. 15. The computer device includes a processor, a memory, a communication interface, a display screen, and an input device, which are connected through a system bus. The processor of the computer device is configured to provide computing and controlling capabilities. The memory of the computer device includes a non-transitory storage medium and an internal memory. The non-transitory memory stores an operating system and a computer program thereon. The internal memory provides an environment for operation of the operating system and computer program in the non-transitory storage medium. The communication interface of the computer device is configured to communicate with an external terminal by wired means, or wireless means which may be realized by Wireless Fidelity (WIFI), Mobile Cellular Network (MCN), near field communication (NFC) or other techniques. A defect identification method is realized in a case where the computer program is executed by the processor. The display screen of the computer device may be either an LCD screen or an e-ink screen. The input device of the computer device may be a touch layer covered on the display screen, or a button, trackball, or touchpad provided on an outer shell of the computer, or may be an external keyboard, an external touchpad, or an external mouse, etc.

A person skilled in the art can understand that the structure shown in FIG. 15 is merely a block diagram of a part of the structure related to the technical solution of the present application, and does not constitute limitation on the computer device to which the technical solution of the present application is applied. A specific computer device may include more or fewer components than those shown in FIG. 15, or some components in FIG. 15 may be combined, or components may be deployed in a manner different from that shown in FIG. 15.

A person skilled in the art can understand that all or part of the processes in the above-mentioned methods in embodiments may be accomplished by instructing relevant hardware through a computer program. The computer program may be stored in a non-transitory computer-readable storage medium. When executed, the computer program may include procedures of respective methods according to the foregoing embodiments. Any reference to a memory, a database, or other medium provided in respective embodiments of the present application may include at least one of non-transitory memory or transitory memory. The non-transitory memory may include a Read-only Memory (ROM), a magnetic tape, a floppy disk, a flash memory, an optical memory, a high-density embedded non-transitory memory, a Resistive Random Access Memory (ReRAM), a Magnetoresistive Random Access Memory (MRAM), a Ferroelectric Random Access Memory (FRAM), a Phase Change Memory (PCM), and a graphene memory, etc. The transitory memory may include such as a Random Access Memory (RAM) or an external cache memory. As illustration rather than limitation, the RAM may take various forms, such as a Static Random Access Memory (SRAM) or a Dynamic Random Access Memory (DRAM). A database involved in respective embodiments provided in the present application may include at least one of relational database or non-relational database. The non-relational database may include a distributed database based on blockchain, which is not limited herein. The processor involved in respective examples provided in the present application may be, which is not limited herein, a general-purpose processor, a central processing unit, a graphics processing unit, a digital signal processor, a programmable logic device, a data processing logic device based on quantum computing, etc.

Respective technical features in the above embodiments are capable of being combined in any way. In order to keep the description concise, not all possible combinations of the technical features in the above embodiments have been described. However, as long as the combinations of these technical features do not cause contradictions, they should all be regarded as within the scope of the specification.

The above examples merely express several implementations of the present application. Their descriptions are relatively specific and detailed, but this should not be understood as limitation on the scope of the present application. It should be pointed out that, for a person skilled in the art, a couple of variations and improvements may be made without departing from the concept of the application, and all of these falls within the scope of protection of the present application. Thus, the scope of protection of the present application is defined by appended claims.

**Claims**

1. A defect identification method, **characterized by** comprising:

    determining whether an image to be identified contains a defect region and determining discrete distribution values corresponding to the image to be identified, by means of an image reconstruction network in a defect identification model; and
    determining, in a case where the image to be identified contains the defect region, a target defect type of the image to be identified by means of a classification network in the defect identification model based on the discrete distribution values corresponding to the image to be identified.

2. The method according to claim 1, wherein the image reconstruction network in the defect identification model comprises an encoder, a decoder, and a target encoding table; and wherein determining whether the image to be identified contains the defect region and determining the discrete distribution values corresponding to the image to be identified by means of the image reconstruction network in the defect identification model comprises:

    obtaining a target encoding result by inputting the image to be identified into the encoder, and determining a reconstructed encoding result of the target encoding result according to the target encoding result and the target encoding table;
    obtaining a target reconstruction image by inputting the reconstructed encoding result of the target encoding result into the decoder, and determining whether the image to be identified contains the defect region based on the image to be identified and the target reconstruction image; and
    determining the discrete distribution values corresponding to the image to be identified based on the target encoding result and the target encoding table.

3. The method according to claim 2, wherein determining the reconstructed encoding result of the target encoding result according to the target encoding result and the target encoding table comprises:
    searching for a similar encoding result of the target encoding result from the target encoding table and taking the similar encoding result as the reconstruction encoding result of the target encoding result.

4. The method according to claim 1, further comprising:

    obtaining a target partitioned image by partitioning an original captured image; and
    obtaining the image to be identified by performing an image enhancement process on the target partitioned image.

5. The method according to any one of claims 1 to 4, further comprising:

    obtaining sample partitioned images by partitioning a sample image having a labeled defect region;
    determining a positive sample image and a negative sample image from the sample partitioned images according to an overlapping relationship between the sample partitioned images and the labeled defect region;
    training the image reconstruction network in the defect identification model based on the positive sample image; and
    training the classification network in the defect identification model based on the negative sample image, a type label of the negative sample image, and the image reconstruction network after training.

6. The method according to claim 5, wherein training the image reconstruction network in the defect identification model based on the positive sample image comprises:

    obtaining a sample encoding result by inputting the positive sample image into an encoder of the image reconstruction network in the defect identification model;
    determining a reconstructed encoding result of the sample encoding result from a target encoding table of the image reconstruction network based on the sample encoding result;
    obtaining a sample reconstruction image by inputting the reconstructed encoding result of the sample encoding result into a decoder of the image reconstruction network; and

training the image reconstruction network in the defect identification model based on the positive sample image, the sample encoding result, the reconstructed encoding result of the sample encoding result, and the sample reconstruction image.

7. The method according to claim 5, wherein training the classification network in the defect identification model based on the negative sample image, the type label of the negative sample image, and the image reconstruction network after training comprises:

obtaining discrete distribution values corresponding to the negative sample image by inputting the negative sample image into the image reconstruction network after training;

obtaining a predicted defect type corresponding to the negative sample image by inputting the discrete distribution values corresponding to the negative sample image into the classification network in the defect identification model; and

training the classification network in the defect identification model based on the discrete distribution values corresponding to the negative sample image, the type label of the negative sample image, and the predicted defect type.

8. A defect identification apparatus, **characterized by** comprising:

a first determining module, configured to determine whether an image to be identified contains a defect region and determine discrete distribution values corresponding to the image to be identified, by means of an image reconstruction network in a defect identification model; and

a second determining module, configured to determine, in a case where the image to be identified contains the defect region, a target defect type of the image to be identified by means of a classification network in the defect identification model based on the discrete distribution values corresponding to the image to be identified.

9. A computer device, comprising a memory and a processor, the memory storing a computer program therein, **characterized in that** the processor, when executing the computer program, performs the steps of the method according to any one of claims 1 to 7.

10. A computer-readable storage medium, storing a computer program thereon, **characterized in that** the computer program, when executed by a processor, performs the steps of the method according to any one of claims 1 to 7.

11. A computer program product, comprising a computer program, **characterized in that** the computer program, when executed by a processor, performs the steps of the method according to any one of claims 1 to 7.

**FIG. 1**

| |
|---|
| determining whether an image to be identified contains a defect region and determining discrete distribution values corresponding to the image to be identified, by means of an image reconstruction network in a defect identification model |

201

| |
|---|
| in a case where the image to be identified contains the defect region, determining, by neans of a classification network in the defect identification model, a target defect type of the image to be identified based on the discrete distribution values corresponding to the image to be identified |

202

**FIG. 2**

obtaining a target encoding result by inputting the image to be identified into the encoder, and determining a reconstructed encoding result of the target encoding result according to the target encoding result and a target encoding table

301

obtaining a target reconstruction image by inputting the reconstructed encoding result of the target encoding result into the decoder, and determining whether the image to be identified contains the defect region based on the image to be identified and the target reconstruction image

302

obtaining a target reconstruction image by inputting the reconstructed encoding result of the target encoding result into the decoder, and determining whether the image to be identified contains the defect region based on the image to be identified and the target reconstruction image

303

**FIG. 3**

FIG. 4

FIG. 5

obtaining a target partitioned image by partitioning an original captured image  601

obtaining an image to be identified by performing an image enhancement process on the target partitioned image  602

determining whether the image to be identified contains a defect region and determining discrete distribution values corresponding to the image to be identified, by means of an image reconstruction network in a defect identification model  603

in a case where the image to be identified contains the defect region, determining, by means of a classification network in the defect identification model, a target defect type of the image to be identified based on the discrete distribution values corresponding to the image to be identified  604

**FIG. 6**

obtaining sample partitioned images by partitioning a sample image having a labeled defect region  701

determining a positive sample image and a negative sample image from the sample partitioned images according to an overlapping relationship between the sample partitioned images and the labeled defect region  702

training the image reconstruction network in the defect identification model based on the positive sample image  703

training the classification network in the defect identification model based on the negative sample image, a type label of the negative sample image, and the image reconstruction network after training  704

**FIG. 7**

obtaining sample partitioned images by partitioning a sample image having a labeled defect region `801`

determining a positive sample image and a negative sample image from the sample partitioned images according to an overlapping relationship between the sample partitioned images and the labeled defect region `802`

training the image reconstruction network in the defect identification model based on the positive sample image `803`

training the classification network in the defect identification model based on the negative sample image, a type label of the negative sample image, and the image reconstruction network after training `804`

**FIG. 8**

obtaining a target encoding result by inputting the image to be identified into the encoder, and determining a reconstructed encoding result of the target encoding result according to the target encoding result and a target encoding table. `901`

obtaining a target reconstruction image by inputting the reconstructed encoding result of the target encoding result into the decoder. `902`

determining whether the image to be identified contains a defect region based on the image to be identified and the target reconstruction image `903`

determining discrete distribution values corresponding to the image to be identified based on the target encoding result and the target encoding table `904`

**FIG. 9**

Images to be identified

Encoder

Decoder

Target reconstructed images

Classification network

Not containing a defect region

Containing a defect region

Classification network

FIG. 10

Defect identification apparatus

First determining module 1110

Second determining module 1120

**FIG. 11**

Defect identification apparatus 1210

First determining module 1211

First determining unit 1211

Second determining unit 1212

Third determining unit 1213

Second determining module 1220

**FIG. 12**

Defect identification apparatus

1310

First determining module  1311

First determining unit

1312

Second determining unit

1313

Third determining unit

1320

Second determining module

1330

First partitioning module

1340

Processing module

**FIG. 13**

Defect identification apparatus

First determining module 1411

First determining unit

1412

Second determining unit

1413

Third determining unit

1410

1480

Second training module

1420

Second determining module

1470

First training module

1430

First partitioning module

1460

Third determining module

1440

Processing module

1450

Second partitioning module

FIG. 14

| Operating system |
| Computer program |
| Non-transitory storage medium |

Processor

Internal memory

System bus

I/O interface

Communication interface

Input device

Display unit

Computer device

**FIG. 15**

## INTERNATIONAL SEARCH REPORT

| International application No. |
| --- |
| **PCT/CN2023/120310** |

**A. CLASSIFICATION OF SUBJECT MATTER**

G06T 7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 类, 分类, 图像, 编码, 缺陷, class, image, code, defect+

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115423798 A (CHINA GENERAL NUCLEAR POWER OPERATION CO., LTD. et al.) 02 December 2022 (2022-12-02) claims 1-12 | 1-11 |
| Y | WO 2021137745 A1 (UNIBAP AB) 08 July 2021 (2021-07-08) description, paragraphs 0085-0126, and claim 1 | 1-11 |
| Y | US 2021027454 A1 (BEIJING BOE OPTOELECTRONICS TECHNOLOGY CO., LTD. et al.) 28 January 2021 (2021-01-28) description, paragraphs 0029-0132, and claims 1-6 | 1-11 |
| A | CN 111627015 A (LENOVO (BEIJING) CO., LTD.) 04 September 2020 (2020-09-04) entire document | 1-11 |
| A | CN 114240908 A (ZHEJIANG UNIVERSITY CITY COLLEGE) 25 March 2022 (2022-03-25) entire document | 1-11 |
| A | CN 114862814 A (SHANGHAI NORMAL UNIVERSITY TIANHUA COLLEGE) 05 August 2022 (2022-08-05) entire document | 1-11 |

☐ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **15 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/120310**

| Patent document cited in search report | | | Publication date (day/month/year) | Patent family member(s) | | | Publication date (day/month/year) |
|---|---|---|---|---|---|---|---|
| CN | 115423798 | A | 02 December 2022 | None | | | |
| WO | 2021137745 | A1 | 08 July 2021 | SE | 2230231 | A1 | 08 July 2022 |
| | | | | SE | 1930421 | A1 | 01 July 2021 |
| US | 2021027454 | A1 | 28 January 2021 | US | 11334982 | B2 | 17 May 2022 |
| | | | | CN | 110414538 | A | 05 November 2019 |
| CN | 111627015 | A | 04 September 2020 | None | | | |
| CN | 114240908 | A | 25 March 2022 | None | | | |
| CN | 114862814 | A | 05 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211170363